Europäisches Patentamt

European Patent Office

Office européen des brevets

(19)

(11) Veröffentlichungsnummer: **0 127 175**
**A1**

(12) # EUROPÄISCHE PATENTANMELDUNG

(21) Anmeldenummer: **84106122.9**

(22) Anmeldetag: **29.05.84**

(51) Int. Cl.³: **B 27 L 5/06**

(30) Priorität: **31.05.83 US 499503**

(43) Veröffentlichungstag der Anmeldung:
**05.12.84 Patentblatt 84/49**

(84) Benannte Vertragsstaaten:
**DE FR IT**

(71) Anmelder: **David R. Webb Co. Inc.**
**206 S.Holland Street P.O. Box 8**
**Edinburgh Indiana 46124(US)**

(72) Erfinder: **Weil, George**

**Mississauga(CA)**

(74) Vertreter: **Planker, Karl-Josef, Dipl.-Phys.**
**c/o BABCOCK-BSH AKTIENGESELLSCHAFT Parkstrasse**
**29 Postfach 4 + 6**
**D-4150 Krefeld 11(DE)**

(54) **Furniermessermaschine.**

(57) Die erfindungsgemäße Furniermessermaschine hat einen elektronisch gesteuerten hydraulischen Positionieran-trieb (58) für den Werkzeugschlitten (42). Die Hydraulik ersetzt den bisher üblichen Leitspindelantrieb und bewirkt sowohl den Vorschub als auch die periodische Anstell- und Rück-zugsbewegung des Messers (50).

EP 0 127 175 A1

**0127175**

Krefeld, den 28. Mai 1984
973-PAT/LIZ -PL/wey- H 84/03 -

David R. Webb Co. Inc.
206 S. Holland Street
P.O. Box 8

Edingburgh / Indiana 46124
U.S.A.

Furniermessermaschine

Die Erfindung betrifft eine Furniermessermaschine gemäß dem Oberbegriff des Patentanspruchs 1.

Bei einer typischen modernen Furniermessermaschine wird der Tisch, auf dem der Holzblock aufgespannt ist, in einer senkrechten Ebene auf und ab bewegt. Von dem Holzblock wird z.B. während der Abwärtsbewegung durch ein nach oben gerichtetes Messer ein Furnierblatt abgeschnitten. Das Messer ist zusammen mit dem Druckbalken auf einem Werkzeugschlitten montiert, der im allgemeinen während des Schnittes feststeht. In jeder Bewegungsperiode des Tisches führt der Werkzeugschlitten eine Vorschubbewegung aus, die der Dicke eines Furnierblattes entspricht. Um während des Rückhubes, d.h. bei dem betrachteten Beispiel bei der Aufwärtsbewegung des Tisches, eine Kollision zwischen Holzblock und Messer zu vermeiden, ist es erforderlich, das Messer aus der Arbeitsstellung zurückzuziehen und, nachdem der Holzblock das Messer passiert hat, wieder anzustellen.

Die meisten heute in Betrieb befindlichen Maschinen arbeiten bezüglich der skizzierten Bewegungsabläufe noch nach dem Vorbild der US-PS 793 306. Der Vorschub erfolgt mit Hilfe von zwei zu beiden Seiten angeordneten Leitspindeln, die vom Hauptantrieb über ein Getriebe z.B. mittels eines Klinkenschaltwerkes jeweils während des Rückhubes schrittweise um einen bestimmten Winkel weitergedreht werden. Dabei sorgt ein Winkelgetriebe für den Gleichlauf der beiden Spindeln. Messer und Druckbalken sind in einem Werkzeugträger angeordnet, der um eine zum Messer parallele Achse in dem Werkzeugschlitten kippbar gelagert ist. Das Zurückziehen und Anstellen des Messers erfolgt durch Kippbewegungen des Werkzeugträgers um diese Achse. Die Kippbewegungen werden über ein Kurbelgetriebe vom Hauptantrieb hergeleitet.

Dieses System ist den heutigen Anforderungen kaum noch gewachsen. Diese sind vor allem gekennzeichnet durch hohe Qualitätsansprüche an die Furniere bei immer höheren Schnittzahlen. Bei Verwendung von Gewindespindeln als Vorschubantrieb sind der Genauigkeit des Vorschubs durch das an vielen Stellen des komplizierten Antriebs auftretende Lager-und Gewindespiel Grenzen gesetzt. Mit zunehmendem Verschleiß, der durch die hohe Schnittfolge beschleunigt wird, ist dieses Problem immer schwerer zu beherrschen. Ein weiterer Nachteil des Leitspindelantriebs besteht auch darin, daß eine Änderung der Furnierdicke relativ umständlich ist. Es bereitet auch unüberwindliche Schwierigkeiten, eine Lagerung zu konstruieren, die einerseits ein Kippen des tonnenschweren Werkzeugträgers mit einer Frequenz von 100 pro Minute, jeweils innerhalb einer Zeitspanne von höchstens 75 Millisekunden, ermöglicht und andererseits die erforderliche Starrheit während des Schnittes gewährleistet. Der ruckartige Vorschub und in noch stärkerem Maße die ebenfalls ruckartige Kippbewegung des Werkzeugträgers verursachen ferner starke Erschütterungen, die ebenfalls die Genauigkeit beeinträchtigen und einen schnelleren Verschleiß der Maschine bewirken.

Im letzten Jahrzehnt sind daher eine Reihe von Ansätzen gemacht worden, diese Unzulänglichkeiten zu beheben. Charakteristisch für alle diese Bemühungen ist, daß sie unter Beibehaltung der den Vorschub bewirkenden Leitspindeln die Kippbewegung des Werkzeugträgers durch eine Hin- und Herbewegung des ganzen Werkzeugschlittens ersetzen.

Gemäß DE-OS 25 48 167 sind die Leitspindeln axial beweglich gelagert und an ihrem Ende mit einer Kolbenzylindereinheit versehen. Durch wechselweise Beaufschlagung wird der Werkzeugschlitten abwechselnd jeweils um ein konstantes Stück hin und her bewegt. Dadurch wird das Messer abwechselnd in die Schneidposition gebracht und wieder ausgerückt.

Gemäß DE-OS 31 10 639 werden die Leitspindeln über ein kompliziertes Differentialgetriebe, das mit dem Hauptantrieb in Verbindung steht, in eine Drehbewegung versetzt, die aus zwei überlagerten Bewegungskomponenten zusammengesetzt ist. Die erste Komponente ist gleichförmig und bewirkt den Vorschub, die zweite Komponente ist sinusförmig und bewirkt das Anstellen und Ausrücken.

Der Oberbegriff des Patentanspruchs 1 geht von einer in dem Prospekt "Neue vertikale Messermaschine MOD. TZ/E" der Firma Cremona aus. Bei dieser Maschine werden die beiden Leitspindeln durch ein Paar elektronisch gesteuerter und mechanisch gepaarter Gleichstrommotoren angetrieben. Die Leitspindeln bewirken sowohl den Vorschub als auch die Anstell- und Rückzugsbewegung des Messers.

Der Erfinder will die angegebenen Nachteile des Standes der Technik vermeiden und hat sich insbesondere die Aufgabe gestellt, eine Furniermessermaschine zu schaffen, die mit höchster Genauigkeit arbeitet und dadurch die Herstellung von Furnieren bester Qualität und Gleichmäßigkeit bei vermindertem Ausschuß ermöglicht. Zur Aufgabenstellung gehört ferner, die Bedienung der Maschine zu vereinfachen, den Verschleiß zu reduzieren und die Wartung zu vereinfachen.

Diese Aufgabe wird erfindungsgemäß dadurch gelöst, daß als Positionierantrieb mindestens eine mit Steuermitteln ausgestattete hydraulische Kolbenzylindereinheit vorgesehen ist.

Erfindungsgemäß wird also in Abkehr vom gesamten Stand der Technik erstmals eine Furniermessermaschine geschaffen, bei der der Vorschubantrieb keine Leitspindeln aufweist.

Ein hydraulisches Antriebsaggregat, das sich zur exakten Positionierung besonders eignet, ist ein Servomotor mit Nachlaufsteuerung gemäß Anspruch 2. Derartige Aggregate sind marktgängig und bestehen allgemein aus einem Betätigungsorgan, einem Steuerorgan und einer doppelt wirkenden Kolbenzylindereinheit. Das Betätigungsorgan führt eine Bewegung aus, die der gewünschten Bewegung der Kolbenzylindereinheit entspricht. Es überträgt diese Bewegung auf das Steuerorgan, das dementsprechend den Zufluß und Abfluß der Hydraulikflüssigkeit zur Kolbenzylindereinheit steuert und damit eine Relativbewegung zwischen Kolben und Zylinder auslöst. Ein Rückführglied überträgt die Kolbenbewegung im Gegensinn zum Betätigungsorgan auf das Steuerorgan, so daß die für die erzeugte Bewegung ursächliche Auslenkung des Steuerorgans rückgängig gemacht wird. Das Steuerorgan kommt also wieder in seine ursprüngliche Lage, sobald die Kolbenzylindereinheit eine zur Bewegung des Betätigungsorgans proportionale Bewegung ausgeführt hat. In dieser Lage sperrt es die Zu- und Abflüsse der Kolbenzylindereinheit, so daß deren Bewegung zum Stillstand kommt.

Als einfaches und robustes Steuerorgan wird gemäß Anspruch 3 ein Servoventil empfohlen.

Das Rückführglied kann prinzipiell mechanischer, hydraulischer oder elektrischer Art sein; bevorzugt wird gemäß Anspruch 4 ein mechanisches Rückführglied.

Als Betätigungsorgan eignet sich jedes Gerät, das in der Lage ist, eine der gewünschten Bewegung des Werkzeugsschlittens entsprechende Bewegung zu erzeugen und auf das Servoventil zu übertragen. Besonders einfach, flexibel und leicht steuerbar ist ein Schrittmotor oder ein Gleichstrom-Servomotor gemäß Anspruch 5.

Gemäß einer bevorzugten, für den rauhen Betrieb besonders geeigneten Ausführungsform sind gemäß Anspruch 6 Betätigungsorgan, Servoventil und Kolbenzylindereinheit koaxial aneinandergesetzt und zu einer integrierten Baueinheit zusammengefaßt, wobei vorzugsweise gemäß Anspruch 7 das Rückführglied eine Gewindespindel ist, die in einem mit dem Kolben der Kolbenzylindereinheit verbundenen Gewinde sitzt.

Durch das Merkmal des Anspruchs 8 wird ohne Zwischenschaltung mechanischer Mittel exakter Gleichlauf erzielt.

Hydraulische Stellorgane mit Merkmalen der Patentansprüche 2-7 sind beispielsweise in der DE-PS 26 25 909, in der DE-OS 28 29 911 und in dem Prospekt "MODEL LS-300" der Firma OLSEN CONTROLS, INC., Bristol, CT, USA, beschrieben. Aus den angegebenen Stellen geht hervor, daß sie auch als "fluidische Linearverstärker" oder "elektrohydraulische Nachlaufverstärker", englisch "Linear Hydraulic Drive" bezeichnet werden. Ihre charakterische Eigenschaft besteht darin, daß sie eine leistungsschwache Bewegung des Betätigungsorgans mit hoher Leistungsverstärkung in eine Bewegung der Kolbenzylindereinheit umwandeln, die hinsichtlich des Bewegungsablaufs und der Endposition ein genaues Abbild der Eingangsbewegung ist.

Die Zeichnung dient zur Erläuterung der Erfindung anhand eines vereinfacht dargestellen Ausführungsbeispiels.

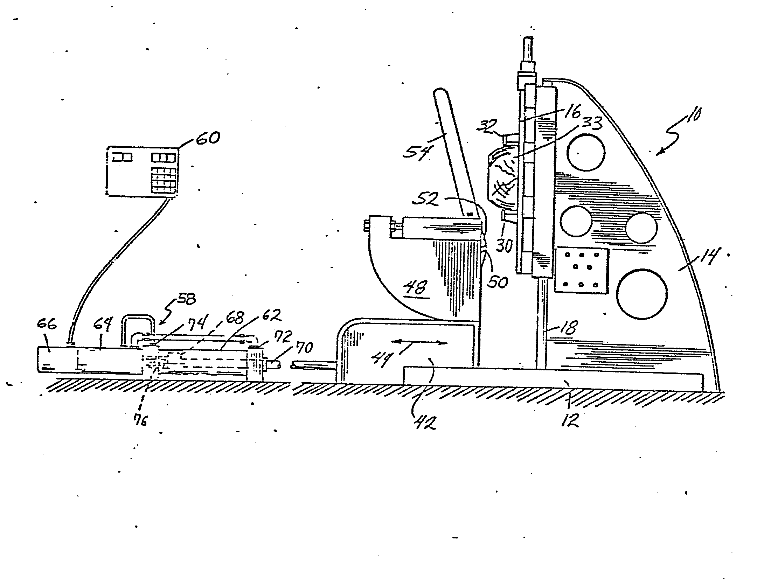

Die in der Zeichnung dargestellte senkrechte Furniermessermaschine 10 hat eine Grundplatte 12, ein Maschinengestell mit zwei seitlichen, spiegelbildlich gleichen Ständern 14, von denen in Fig. 1 nur der eine sichtbar ist, und einen Tisch 16. Der Tisch 16 ist mittels eines nicht sichtbaren herkömmlichen Antriebs in einer senkrechten Ebene längs einer Linie, die mit der Vertikalen einen spitzen Winkel einschließt, in Gleitführungen 18 hin und her beweglich. Er ist in üblicher Weise mit einer Anzahl von über die gesamte Breite verteilten, hydraulisch betätigten Klauen 30, 32 zum Festspannen eines Holzblocks 33 ausgestattet.

Ein Werkzeugschlitten 42 ist - wie durch den Pfeil 44 symbolisiert - auf nicht dargestellten waagerecht angeordneten Schienen hin und her beweglich. Starr mit dem Werkzeugschlitten 42 verbunden ist ein Messerträger 48, an dem ein Messer 50 mit nach oben gerichteter Schneide befestigt ist. In kurzem Abstand über der Messerschneide ist ein Druckbalken 52 angeordnet. Dieser ist an einem Balkenträger 54 befestigt, der justierbar mit dem Messerträger 48 verbunden ist. Insoweit entspricht die Messermaschine dem Stand der Technik.

Als Antrieb für den Werkzeugschlitten 42 ist an beiden Seiten der Maschine jeweils in der Nähe der Schienen, auf denen der Werkzeugschlitten 42 geführt ist, je ein Servomotor 58 mit Nachlaufsteuerung (Linearverstärker) angeordnet. Dieser besteht aus einer hydraulischen Kolbenzylindereinheit 62, einem Servoventil 64 und einem Schrittmotor 66. Diese Teile sind axial aneinandergesetzt und bilden eine integrierte Baueinheit. Zu der Kolbenzylindereinheit 62 gehört ein Kolben 68 mit einer drehfest angeordneten Kolbenstange 70, deren freies Ende mit dem Werkzeugschlitten 42 verbunden ist. Der Zylinder ist mit dem Fundament oder der Grundplatte der Messermaschine verbunden. In der Nähe seiner beiden Endplatten hat er Anschlüsse 72 bzw. 74 für Druckleitungen. Das Servoventil 64 ist von üblicher Bauart (4/3-Wegeventil mit stufenlos einstellbaren Zwischenstellungen). Als Rückführglied, das die Auslenkung des Kolbens 68 auf den in der Zeichnung nicht sichtbaren Steuerkolben des Servoventils 64 überträgt, ist eine Spindel 76 vorgesehen, die in einem mit dem Kolben 68 verbundenen Kugelgewinde gelagert ist (vergleiche den bereits genannten Prospekt OLSEN CONTROLS). Die Anschlüsse 72 und 74 der Kolbenzylindereinheit 62 sind durch Rohre mit Anschlüssen des Servoventils 64 verbunden. Das Servoventil 64 hat weitere nicht dargestellte Anschlüsse, von denen der eine mit einer Druckflüssigkeitsquelle und der andere mit einem drucklosen Tank in Verbindung steht.

Die Schrittmotoren 66 beider Servomotoren 58 sind mit dem Ausgang eines gemeinsamen Steuergerätes 60 (z.B. Profiler II Programmable Motion Controller, Hersteller: Kiowa Corporation, Eden Prairie, Minnesota, USA) verbunden, das mit einem Programmspeicher ausgerüstet ist und auf Mikroprozessorbasis arbeitet. Aus den im Programm enthaltenen numerischen Daten formt das Steuergerät 60 ein Signal für die Schrittmotoren 66, das die Richtung, die Anzahl und die zeitliche Folge der Schritte bestimmt, die die Schrittmotoren bei dem zugehörigen Schalttakt machen.

Ein Eingang des Steuergerätes 60 ist mit nicht dargestellten Mikroschaltern, Positionsmeßfühlern oder dergleichen verbunden, die die jeweilige Stellung des Tisches 16 an das Steuergerät 60 melden.

Die Messermaschine arbeitet folgendermaßen: Nachdem ein neuer Holzblock 33 auf dem Tisch 16 festgespannt ist, steht der Werkzeugschlitten 42 zunächst noch in einer weit zurückgezogenen Ruhestellung. Auf Grund eines vom Steuergerät 60 gegebenen Anfangssignals führt der Schrittmotor 66 eine aus einer Anzahl von Schritten bestehende Drehbewegung aus, deren Drehrichtung der Einfachheit halber als "vorwärts" bezeichnet wird. Dadurch wird der Kolben 68 um ein entsprechendes Stück verschoben. Er bewegt den Werkzeugschlitten 42 in eine Anfangsstellung, so daß das Messer 50 von dem sich nach unten bewegenden Holzblock 33 ein erstes Furnierblatt abschneidet. Nach Beendigung des Schneidhubes gibt das Steuergerät 60 ein neues Signal, welches den Schrittmotor 66 veranlaßt, sich rückwärts zu drehen; dadurch wird der Kolben 68 und mit ihm der Werkzeugschlitten 42 zurückgezogen. Diese Bewegung findet in dem kurzen Zeitintervall statt, während sich der Holzblock 33 im unteren Umkehrbereich befindet. Durch das Zurückziehen des Werkzeugschlittens 42 hat der Holzblock 33 genügend Platz, um sich aufwärts an dem Messer 50 und dem Druckbalken 52 vorbei in seine Ausgangsstellung zu bewegen. Während sich der Holzblock 33 im oberen Umkehrbereich befindet, gibt das Steuergerät 60 ein neues Signal, das den Schrittmotor 66 wieder zu einer vorwärts gerichteten Drehung veranlaßt. Dabei ist die Anzahl der Schritte größer als bei der vorhergehenden Rückwärtsdrehung. Dementsprechend wird der Werkzeugschlitten 42 in eine neue Arbeitsstellung bewegt, die im Vergleich mit der vorhergehenden Arbeitsstellung entsprechend der gewünschten Furnierdicke ein wenig in Richtung auf die Ebene verschoben ist, in der sich der Tisch 16 auf und ab bewegt.

Dieses Spiel wiederholt sich, bis der Werkzeugschlitten 42 soweit vorgeschoben ist, daß bei weiterer Annäherung an den Tisch 33 die Klauen 30, 32 mit dem Messer 50 kollidieren würden. Dann gibt das Steuergerät 60 ein Rückzugssignal, worauf der Werkzeugschlitten 42 in seine Ruhestellung zurückfährt.

Die Furnierdicke richtet sich offenbar nach der Differenz der Schrittzahlen zweier aufeinanderfolgender Schalttakte. Bei einer bevorzugten Ausführungsform der Erfindung entspricht jedem Schritt eine Bewegung des Werkzeugschlittens 42 um etwa 0,025 mm (0,001"). Das bedeutet, daß die Furnierdicke in Stufen von 0,025 mm gewählt werden kann. Da der Antrieb völlig spielfrei arbeitet und äußerst steif ist, läßt sich eine vorgegebene Positionierung und damit eine vorgegebene Furnierdicke mit einer Exaktheit einstellen, die mit einem Leitspindelantrieb kaum zu erreichen ist. Der Gleichlauf der beiden Stellmotoren wird elektrisch erzwungen, da beide Stellmotoren dasselbe Steuersignal erhalten. Dadurch wird ohne komplizierte mechanische Kopplung auf der ganzen Blattbreite mit hoher Genauigkeit eine gleichmäßige Furnierdicke erreicht. Wenn man die Furnierdicke ändern will, braucht man nur den entsprechenden Befehl in das Steuergerät 60 einzugeben. Zeigt sich z.B. beim Messern eines Blockes, daß die Qualität des Holzes der eingestellten Furnierdicke nicht entspricht, läßt sich durch einen einfachen Eingriff der Antrieb auf eine andere Furnierdicke einstellen. Wenn beim Messern eines Blockes eine Unterbrechung erforderlich ist, kann die augenblickliche Position des Werkzeugschlittens 42 gespeichert werden; der Werkzeugschlitten kann in seine Ruhestellung zurückgefahren und nach dem Ende der Unterbrechung wieder genau in die gespeicherte Stellung gebracht werden. Durch passende Wahl der zeitlichen Abstände der vom Steuergerät 60 an die Schrittmotoren 66 abgegebenen Impulse läßt sich das Zeitintervall, in dem der Holzblock 33 außerhalb des Eingriffsbereichs des Messers 50 ist, optimal ausnutzen, so daß
der Bewegungsablauf des Werkzeugschlittens 42 wesentlich
weicher ist als bei herkömmlichen Furniermessermaschinen.
Mit der Programmsteuerung läßt sich auch ohne Schwierigkeit
eine kontinuierliche Bewegung des Werkzeugschlittens 42
(wie bei DE-OS 31 10 639) realisieren, vorausgesetzt, daß
die Holzart eine senkrecht zur Schnittebene gerichtete
Relativbewegung zuläßt.

Die Erfindung ist an einer Furniermessermaschine erprobt
worden, die dem in der Zeichnung dargestellten Ausführungsbeispiel entspricht, d.h. an einer senkrecht arbeitenden
Maschine, bei der der Schnitt während der Abwärtsbewegung
des Holzblocks erfolgt. Es sind in den letzten Jahren auch
Messermaschinen gebaut worden, bei denen die Messerschneide
nach unten gerichtet ist und der Schnitt bei der Aufwärtsbewegung erfolgt. Die Erfindung ist auch für derartige
Maschinen anwendbar.

Es gibt auch Furniermessermaschinen, bei denen sich der
Tisch in einer Ebene bewegt, die einen spitzen Winkel
(kleiner als etwa 20 Grad) mit der Vertikalen einschließt.
Auch für diese Maschinen ist die Erfindung selbstverständlich geeignet, und es bestehen keine prinzipiellen Hindernisse, sie auch bei Maschinen mit größerem Neigungswinkel
und sogar bei horizontalen Maschinen anzuwenden.

Bei modernen Furniermessermaschinen sind in aller Regel
die Gleitführungen des Tisches starr mit einem ortsfesten
Gestell verbunden, d.h. die Bewegungsebene des Tisches ist
ebenfalls ortsfest. Dagegen ist der Werkzeugschlitten
in Führungen, die rechtwinklig zur Ebene des Tisches angeordnet sind, beweglich. Man hat aber auch schon Überlegungen
angestellt, den Werkzeugschlitten ortsfest und das Gestell,
an dem sich die Gleitführungen für den Tisch befinden, beweglich anzuordnen. Dieser Unterschied spielt für die Erfindung keine Rolle; es kommt allein auf die Relativbewegung
an.

0127175

Krefeld, den 28. Mai 1984
973-PAT/LIZ   -PL/wey H 84/03 -

David R. Webb Co. Inc.
206 S. Holland Street
P.O. Box 8
Edingburgh / Indiana 46124
U.S.A.

Patentansprüche

1. Furniermessermaschine

mit einem hin und her beweglichen Tisch (16) zum Aufspannen eines Holzblocks (33)

mit einem mit Messer (50) und Druckbalken (52) bestückten Werkzeugschlitten (42), der längs einer zur Bewegungsebene des Tisches (16) rechtwinkligen Linie relativ zu dieser Ebene hin und her beweglich ist

und mit einem elektronisch gesteuerten Positionierantrieb (58) zur Erzeugung der Relativbewegung zwischen dem Werkzeugschlitten (42) und der genannten Ebene,

dadurch gekennzeichnet, daß als Positionierantrieb mindestens eine mit Steuermitteln (64) ausgestattete hydraulische Kolbenzylindereinheit (62) vorgesehen ist.

2. Furniermessermaschine nach Anspruch 1, dadurch gekennzeichnet, daß der Positionierantrieb als Servomotor
mit Nachlaufsteuerung (62, 64, 66, 76) ausgebildet ist.

3. Furniermessermaschine nach Anspruch 2, gekennzeichnet
durch ein Servoventil (64) als Steuermittel.

4. Furniermessermaschine nach Anspruch 3, gekennzeichnet
durch ein mechanisches Rückführglied (76).

5. Furniermessermaschine nach Anspruch 4, gekennzeichnet
durch einen elektronisch gesteuerten Schrittmotor (66)
oder Servogleichstrommotor als Betätigungsorgan.

6. Furniermessermaschine nach Anspruch 5, dadurch gekennzeichnet, daß das Betätigungsorgan (66), das Servoventil
(64) und die Kolbenzylindereinheit (62) koaxial aneinandergesetzt und als integrierte Baueinheit zusammengefaßt sind.

7. Furniermessermaschine nach Anspruch 6, dadurch gekennzeichnet, daß das Rückführglied eine Gewindespindel (76)
ist, die in einem mit dem Kolben (68) der Kolbenzylindereinheit (62) verbundenen Gewinde sitzt.

8. Furniermessermaschine nach einem der Ansprüche 1 bis 7,
dadurch gekennzeichnet, daß mehrere Kolbenzylindereinheiten (62) gemeinsam an ein elektronisches Steuergerät
(60) angeschlossen sind.

1/1

**Europäisches Patentamt**

**EUROPÄISCHER RECHERCHENBERICHT**

## EINSCHLÄGIGE DOKUMENTE

EP 84106122.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | <u>DE - A1 - 2 558 487</u> (BRIQUETERIE ET SCIERIE D'ANCENIS ET FABRIQUE DE PLACAGES ANGEBAULT FRERES) | 1 | B 27 L 5/06 |
| | -- | | |
| X | <u>US - A - 4 089 354</u> (CREMONA) | 1 | |
| | -- | | |
| X | <u>US - A - 3 654 973</u> (KOSS) | 1 | |
| | -- | | |
| A,D | <u>DE - C2 - 2 625 909</u> (SIG SCHWEIZERISCHE INDUSTRIE-GESELL-SCHAFT) | 2-7 | |
| | -- | | |
| A,D | <u>DE - A1 - 2 829 911</u> (HARTMANN & LAMMLE GMBH & CO KG) | 2-7 | |
| | ---- | | |

| RECHERCHIERTE SACHGEBIETE (Int. Cl. ³) |
|---|
| B 27 L 5/00 |
| F 15 B 9/00 |

Der vorliegende Recherchenbericht wurde für alle Patentansprüche erstellt.

| Recherchenort | Abschlußdatum der Recherche | Prüfer |
|---|---|---|
| WIEN | 27-08-1984 | EBERLE |